# EUROPÄISCHE PATENTSCHRIFT

(11) **EP 0 890 195 B1**
(45) Veröffentlichungstag und Bekanntmachung des Hinweises auf die Patenterteilung: **24.05.2000**
(21) Anmeldenummer: 97918012.2
(22) Anmeldetag: 08.03.1997
(51) Int. Cl.: H01M 8/12, H01M 4/88, C04B 35/622, B22F 3/22

(54) **BESCHICHTUNG VON PORÖSEN ELEKTRODEN MIT DÜNNEN ELEKTROLYTSCHICHTEN**
COATING OF POROUS ELECTRODES WITH THIN ELECTROLYTE LAYERS
REVETEMENT D'ELECTRODES POREUSES AVEC DE MINCES COUCHES ELECTROLYTIQUES

(30) Priorität: 11.03.1996 DE 19609418
(43) Veröffentlichungstag der Anmeldung: 13.01.1999
(73) Patentinhaber: FORSCHUNGSZENTRUM JÜLICH GMBH, 52425 Jülich (DE)
(72) Erfinder: BLASS, Günter, D-52249 Eschweiler (DE); MANS, Dieter, D-52523 Waldfeucht (DE); BOLLIG, Gottfried, D-50126 Bergheim (DE); FÖRTHMANN, Rüdiger, D-52159 Roetgen (DE); BUCHKREMER, Hans-Peter, D-52525 Heinsberg (DE)
(86) Internationale Anmeldenummer: DE9700455
(87) Internationale Veröffentlichungsnummer: WO9734333

(56) Entgegenhaltungen:
- EP-A- 0 414 270
- EP-A- 0 714 104
- PATENT ABSTRACTS OF JAPAN vol. 018, no. 277 (E-1554), 26.Mai 1994 & JP 06 052869 A (NIPPON TELEGR & TELEPH CORP), 25.Februar 1994, & CHEMICAL ABSTRACTS, vol. 121, no. 10, 5.September 1994 Columbus, Ohio, US; abstract no. 113316,
- PATENT ABSTRACTS OF JAPAN vol. 016, no. 215 (E-1204), 20.Mai 1992 & JP 04 036964 A (YUASA BATTERY CO LTD), 6.Februar 1992, & CHEMICAL ABSTRACTS, vol. 116, no. 22, 1.Juni 1992 Columbus, Ohio, US; abstract no. 218153,
- PATENT ABSTRACTS OF JAPAN vol. 095, no. 001, 28.Februar 1995 & JP 06 283179 A (NIPPON TELEGR & TELEPH CORP), 7.Oktober 1994, & CHEMICAL ABSTRACTS, vol. 122, no. 10, 6.März 1995 Columbus, Ohio, US; abstract no. 110684,
- PATENT ABSTRACTS OF JAPAN vol. 016, no. 238 (C-0946), 2.Juni 1992 & JP 04 050184 A (YUASA BATTERY CO LTD), 19.Februar 1992, & CHEMICAL ABSTRACTS, vol. 117, no. 6, 10.August 1992 Columbus, Ohio, US; abstract no. 52404,
- EXTENDED ABSTRACTS, SPRING MEETING 1993 MAY 16-21 TH, HONOLULU, Bd. 93/1, 1.Januar 1993, Seite 1568 XP000421803 AIZAWA M ET AL: "DEVELOPMENT OF TUBULAR TYPE SOFC BY WET PROCESS"
- ARAI H ET AL: "FABRICATION OF YSZ THIN FILM ON ELECTRODE SUBSTRATE AND ITS SOFC CHARACTERISTICS" 2.Juli 1991 , PROCEEDINGS OF THE INTERNATIONAL SYMPOSIUM ON SOLID OXIDE FUEL CELL, ATHENS, JULY 2 - 5, 1991, NR. SYMP. 2, PAGE(S) 167 - 174 , GROSZ F;ZEGERS P; SINGHAL S C; YAMAMOTO O XP000546107 siehe Seite 168, Absatz 4; Abbildung 2
- PATENT ABSTRACTS OF JAPAN vol. 015, no. 470 (E-1139), 28.November 1991 & JP 03 203166 A (MATSUSHITA ELECTRIC IND CO LTD), 4.September 1991, & CHEMICAL ABSTRACTS, vol. 116, no. 6, 10.Februar 1992 Columbus, Ohio, US; abstract no. 43525,
- PATENT ABSTRACTS OF JAPAN vol. 095, no. 001, 28.Februar 1995 & JP 06 283178 A (NIPPON TELEGR & TELEPH CORP), 7.Oktober 1994, & CHEMICAL ABSTRACTS, vol. 122, no. 10, 6.März 1995 Columbus, Ohio, US; abstract no. 110685,
- CHEMICAL ABSTRACTS, vol. 114, no. 20, 20.Mai 1991 Columbus, Ohio, US; abstract no. 189100, ISHIBASHI MASARU ET AL: "Cylindrical solid-electrolyte fuel cells" XP000286078 & JP 02 220 361 A (MITSUBISHI HEAVY INDUSTRIES) 3.September 1990 & PATENT ABSTRACTS OF JAPAN vol. 14, no. 524 (E-1003), 16.November 1990 JP
- PATENT ABSTRACTS OF JAPAN vol. 016, no. 095 (E-1175), 9.März 1992 & JP 03 274673 A (MITSUBISHI ELECTRIC CORP), 5.Dezember 1991, & CHEMICAL ABSTRACTS, vol. 116, no. 16, 20.April 1992 Columbus, Ohio, US; abstract no. 155479,

## Beschreibung

Die Erfindung bezieht sich auf ein Verfahren zur Herstellung einer dünnen Schicht auf einem porösen Substrat. Insbesondere werden hierdurch dünne Elektrolytschichten auf porösen Elektroden hergestellt. Diese werden vorzugsweise für (Hochtemperatur-) Brennstoffzellen eingesetzt.

Aus DE 44 37 105 sowie aus DE 195 20 458 ist bekannt, Elektrode-/Elektrolyteinheiten mit dünnen Elektrolytschichten in der Größenordnung von 20 um mittels Elektrophorese herzustellen. Es hat sich jedoch gezeigt, daß bei der Elektrophorese nur Substrate eingesetzt werden können, die eine bestimmte Porengrößenverteilung aufweisen. Insbesondere Elektroden, die gemäß dem aus DE 33 05 530 sowie aus DE 33 05 529 bekannten Coat-Mix-Verfahren hergestellt wurden, ließen sich nicht mittels Elektrophorese großflächig beschichten. Ursächlich hierfür waren die groben Poren, die bei mittels Coat-Mix-Verfahren hergestellten Elektroden auftreten. Grobporige Elektroden stellen in einer Hochtemperatur-Brennstoffzelle einen schnellen Gasaustausch sicher. Die Beibehaltung der Porosität ist daher erwünscht.

Zur Herstellung von Elektrolytschichten ist ferner das Foliengießen bekannt. Nachteilhaft werden hierfür große und teure Foliengießbänke benötigt.

Aufgabe der Erfindung ist die Schaffung eines einfachen Beschichtungsverfahrens, mittels dem grobporige Substrate dünn beschichtet werden können.

Verfahrensgemäß wird eine Suspension auf die zu beschichtende Substratoberfläche gegossen. Die Suspension kann je nach Anwendungszweck metallische, keramische oder Verbund-Feststoffe enthalten. Das Lösungsmittel entweicht durch die Poren. Auf der Substratoberfläche verbleiben die Feststoffanteile. Das Substrat mit den darauf befindlichen Feststoffanteilen wird zunächst getrocknet und anschließend zum Endprodukt gesintert.

Enthält die Suspension beispielsweise ZrO₂ + 8 mol% Y₂O₃ (YZS), so entsteht eine gasdichte Schicht auf dem Substrat. Diese Schicht kann als Elektrolytschicht in einer Hochtemperatur-Brennstoffzelle fungieren. Enthält die Suspension zusätzlich Anteile an NiO, so entsteht hieraus eine poröse Schicht, die verhältnismäßig kleine Poren aufweist im Verhältnis zu Porengrößen, die typischerweise Elektroden in einer Hochtemperatur-Brennstoffzelle aufweisen. Wird NiO zu Ni in dieser Schicht reduziert, so entstehen weitere Poren. Eine derart hergestellte Schicht kann beispielsweise als dünne, katalytisch wirkende Funktionsschicht einer Anode fungieren. Diese enthält dann z. B. 60 Vol% YSZ- und 40 Vol% NiO-Anteile Auf diese poröse Funktionsschicht kann dann verfahrensgemäß z. B. eine als Elektrolyt fungierende YSZ-Schicht aufgebracht werden.

Das Substrat ist vorteilhaft als Boden einer "Schlickerform" (Schlickerguß) ausgestaltet. Auf diese Weise wird verhindert, daß ein Teil der Suspension seitlich abfließt und so Materialanteile verloren gehen. Im Unterschied zum herkömmlichen Schlickerguß wird der "Boden der Schlickerform" nach dem Gießen nicht von der gegossenen Keramikschicht getrennt, sondern bleibt fest damit verbunden. Das Substrat wird zu diesem Zweck beispielsweise mittels einer Maske derart eingerahmt, daß hierdurch eine Art Behälter entsteht. Die zu beschichtende Substratseite bildet dabei den Behälterboden. In den Behälter wird dann die Suspension gefüllt. Verwendet werden beispielsweise die aus DE 44 37 105 sowie aus DE 195 20 458 bekannten Suspensionen zur Herstellung einer Elektrode mit einer darauf befindlichen dünnen Elektrolytschicht.

Vorteilhaft weist die Suspension Feststoffanteile auf, deren Durchmesser so bemessen sind, daß hierdurch die Poren des Substrates bzw. der Elektrode zugesetzt, d. h. verstopft werden (Grobanteile). Hierdurch wird bewirkt, daß einerseits Feststoffanteile in der Suspension, die im Durchmesser kleiner als der Durchmesser der Poren des Substrates sind, nach der Zusetzung der Poren nicht durch das Substrat hindurchfließen und so ungenutzt bleiben. Andererseits wird so eine "Verzahnung" zwischen Substrat und Schicht erzielt, da ein Teil der Partikel in die Poren des Substrates eindringen. Die Verzahnung bewirkt vorteilhaft eine mechanisch außerordentlich stabile Verbindung zwischen Substrat und Schicht. Die stabile Verbindung ist z. B. dann von besonderem Vorteil, wenn die Substrat-Schicht-Einheit stark schwankenden Temperaturen ausgesetzt wird, so daß die Verbindung thermisch bedingten Spannungen gewachsen sein muß. Solche thermisch bedingten Spannungen treten beispielsweise in einer Hochtemperatur-Brennstoffzelle auf.

Im optimalen Fall enthält die Suspension zu diesem Zweck Feststoffanteile, deren maximaler Durchmesser gleich dem Durchmesser der minimalen Porengröße in der Elektrode ist. Es wird dann eine besonders gute Verzahnung und damit eine besonders gute mechanische Verbindung erzielt. Darüber hinaus ist das Sinterverhalten umso besser, je kleiner die Partikel in der Suspension sind. Der Durchmesser der Grobanteile ist hier also auch aus diesem Grunde vorteilhaft minimiert worden.

Vorteilhaft wird der Anteil der Grobanteile in der Suspension minimiert. Das heißt, er ist so groß gewählt, daß die Poren zugesetzt werden, nicht aber eine Schicht mittels der grobkörnigen Anteile aufgebaut wird. 3 bis 10 % Grobanteile haben sich - je nach Substrat - als ausreichend herausgestellt.

Diese Grobanteile liegen vorzugsweise in der Größenordnung 3 - 4 µm, wenn Substrate bzw. Elektroden beschichtet werden, die für Hochtemperatur-Brennstoffzellen bestimmt sind und eine für diesen Anwendungszweck typische Porengröße aufweisen. Die Porosität liegt typischerweise in der Größenordnung 45 - 48 %. Die Porengröße liegt dann bei etwa 5 ± 2 µm.

Vorteilhaft weist die Suspension Feststoffanteile auf, deren Durchmesser zumindest 5-fach, insbesondere 8 bis 12-fach kleiner als die Feststoffanteile sind, die der Zusetzung der Poren dienen (Feinanteile).

Die Feinanteile weisen insbesondere eine Größenordnung von 0,3 - 0,4 µm auf, wenn grobkörnige Anteile mit Durchmessern von 3 bis 4 µm vorgesehen sind.

Die Grobanteile sinken zunächst im Verhältnis zu den Feinanteilen beschleunigt nach unten. Sie setzen die Poren zu. Anschließend scheiden sich hierauf die Feinanteile ab.

Feinanteile sind erwünscht, da diese ein besseres Sinterungsverhalten als grobkörnige Anteile zeigen. Es hat sich gezeigt, daß so geeignete Elektroden-Elektrolyt-Einheiten für Hochtemperatur-Brennstoffzellen problemlos herstellbar sind.

Vorteilhaft wird ferner auf der Seite des Substrates bzw. der Elektrode, die nicht beschichtet wird, ein Vakuum erzeugt. Auf diese Weise wird das in der Suspension vorhandene Lösungsmittel vollständig während des Beschichtungsvorgangs abgesaugt. Auf dem Substrat bzw. der Elektrode scheiden sich so nur noch die Partikel schichtförmig ab, die in der Suspension enthalten waren. Darüber hinaus wird so eine gute Anbindung der Partikel an das Substrat bzw. an die Elektrode sichergestellt.

Nach Aufbringung der Partikel auf das Substrat/ die Elektrode wird die Einheit an Luft getrocknet. Es hat sich gezeigt, daß bei der Trocknung keinerlei Probleme, wie Rißbildung, auftraten. Hier weist das Verfahren wesentliche Vorteile gegenüber dem Elektrophoreseverfahren auf. Mittels Elektrophorese hergestellte Elektrolytschichten neigten während des Trocknungsvorgangs zur Rißbildung.

Das Produkt wird nach den üblichen, von der Elektrophorese her bekannten Herstellungsschritten zum Endprodukt weiterverarbeitet.

Das beanspruchte Gießverfahren weist folgende Vorteile auf:
- Es lassen sich dichte Schichten mit Schichtdicken zwischen 0,5µm und 200 µm herstellen.
- Über den Feststoffgehalt der Suspension und Substratgröße läßt sich die Schichtdicke definiert einstellen.
- Es erfolgt eine gute und übergangslose Anbindung Substrat-Elektrolytschicht und damit eine gute Haftung der Schicht auf dem Substrat.
- Es gibt nur geringe Verluste an Suspension beim Beschichtungsvorgang.
- Die Trocknung der gegossenen Schichten ist unproblematisch.
- Sauberes und staubfreies Arbeiten ist relativ einfach möglich.

Nachteile des Verfahrens sind:
- Es können keine sehr dicken Schichten gegossen werden. Die obere Grenze der herstellbaren Schichtdikken lag bisher bei etwa 200 µm.
- Die Porengröße der Substrate ist nach unten begrenzt. Bei zu kleinen Poren kann das Lösungsmittel nicht mehr das Substrat passieren.

Es zeigen
- Figur 1:: Skizze der Apparatur zum Beschichten von 100×100 mm²-Substraten,
- Figur 2:: Teilchengrößenverteilungen der hergestellten Suspensionen BMB 6+7 und 34+35.

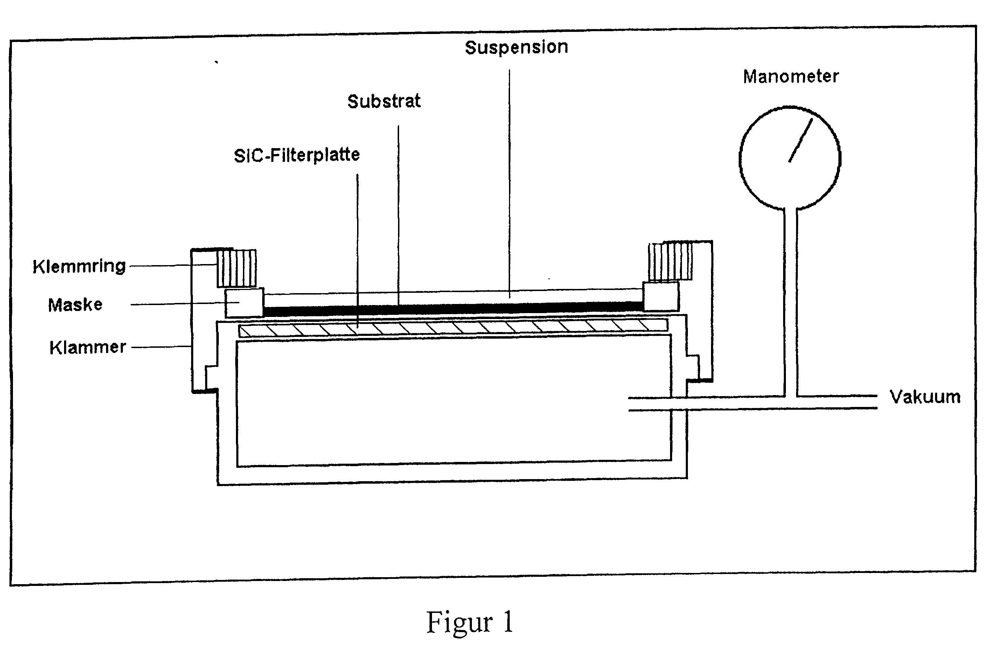

Es wurden zwei Apparaturen gebaut, die für die Beschichtung von quadratischen Substraten von 100x100 mm² (siehe Figur 1) und 250x250 mm² (Endmaß) geeignet sind.

Zunächst wurden YSZ-Suspensionen nach der Vorschrift zur Herstellung von Suspensionen für die elektrophoretische Abscheidung hergestellt:
1. Vorbereitung des Ausgangspulvers:
   - Kalzinierung des YSZ-Pulvers (Al₂O₃-Tiegel mit je 2 kg YSZ-Pulver/ RT (Raumtemperatur) →3K/min.→1200°C /3h →RT an Luft)
   - Lagerung (problemlos)
2. Zerkleinerung und Dispergierung:
   - Einwaage in 1 1 Polyethylen-Weithalsflasche (200g kalziniertes YSZ-Pulver, 600g (765 ml) Ethanol absolut, 600g 3mm-Mahlkugeln (teilstabilisiertes Zirkoniumdioxid mit 3% Yttrium: TZ-3Y), 600g 5mm-Mahlkugeln (TZ-3Y))
   - Mahlen (48h Rollenbank (Drehzahlstufe 3-4))
   - Einwaage in 1 l PE-Weithalsflasche (3,9-4,0g Polyethylenimin-(PEI)-Lsg.)
   - Sedimentation (40h (der nicht dispergierte Anteil setzt sich ab))

Nach 40 h Sedimentation wird die Suspension vom Sediment durch einfaches Abgießen getrennt. Das Sediment wird verworfen. Danach wird in einem aliquoten Teil der Feststoffgehalt gravimetrisch bestimmt. Dazu werden je 1 ml Suspension in einen ausgeglühten und gewogenen CaSZ-Tiegel (CaSZ: calziumstabilisiertes Zirkoniumdioxid) abpippetiert, bei 80°C an Luft im Trockenschrank getrocknet, dann 3 Stunden im Muffelofen bei 1050°C geglüht und zurückgewogen. Die Gewichtsdifferenz ergibt den YSZ-Gehalt pro ml Suspension. Der Feststoffgehalt soll etwa 40 g/l betragen.

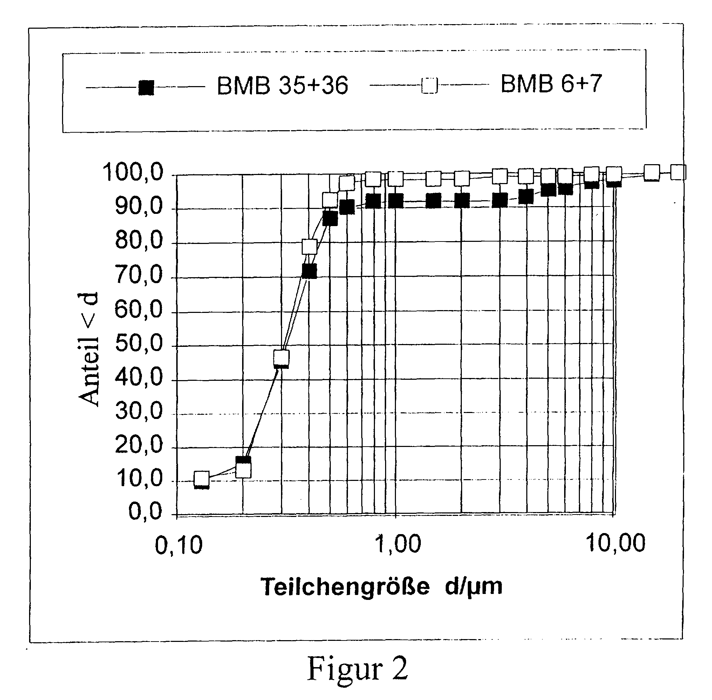

An einer kleinen Probe der Suspension wird die Teilchengrößenverteilung mit dem Particle Size Analyzer SA-CP3 der Firma SHIMADZU gemessen. Die mittlere Teilchengröße (Medianwert) liegt bei etwa 0,3 µm. Zwei typische Teilchengrößenverteilungen sind in Figur 2 dargestellt. Es hat sich als sehr zweckmäßig erwiesen, wenn die Suspensionen etwa 3-5% Grobanteile enthalten (vgl. Suspension BMB 34+35).

Die Substrate werden nach der Vorsinterung gewogen. Die richtige Reinigung und Vorbereitung der Anodensubstrate ist sehr wichtig für die Qualität der Schichten, d.h. die Substrate sind staubfrei und sauber zu lagern und bei der Handhabung sind Latexhandschuhe zu benutzen.

Die vorgereinigte Substratplatte wird optisch unter dem Stereomikroskop auf einwandfreie Oberfläche und unbeschädigte Ecken und Kanten kontrolliert. Danach wird ein Klingtest mit dem Fingernagel gemacht, um festzustellen, ob der Substratscherben rißfrei ist. Nicht einwandfreie Substrate werden verworfen. Dann wird das Substrat mit Ethanol getränkt und mit der beschrifteten (Proben-Nr.) Unterseite auf die Filterplatte der Apparatur aufgelegt. Mit einer passenden Silikonkautschukmaske werden die Ränder abgedichtet. Die Maske soll in ihren Abmessungen etwa 0,5 mm kleiner als das Substrat sein, damit sie eng an den Rändern anliegt und gut abdichtet. Danach wird die Maske mit einem PVC-Klemmring angepreßt. Es ist sorgfältig darauf zu achten, daß die Silikonkautschukmaske sich beim Anpressen so dicht an das Substrat anlegt, daß keine Suspension zwischen Dichtung und Substrat durchgesaugt werden kann. Als nächstes wird durch Auflegen einer Libelle und Einstellung über den verstellbaren Tisch die Substratplatte waagerecht ausgerichtet. Mit Preßluft wird dann das Substrat gut abgeblasen und anschließend die Apparatur sofort mit einem Deckel verschlossen, der nur noch zum Eingießen der Suspension und zur Entnahme der fertig beschichteten Platte geöffnet wird.

Ein entsprechend der Plattengröße, der geforderten Schichtdicke und dem Feststoffgehalt der Suspension ausgerechnetes Volumen wird dann sofort auf das eingebaute Substrat aufgegeben (V = d F ρ / c mit V = Volumen der Suspension (ml), d = Dicke der Elektrolytschicht (cm), F = Fläche des Substrats (cm²), ρ = Dichte der Elektrolytschicht (g cm⁻³) und c = Feststoffkonzentration der Suspension (g/ml)). Danach wird die Vakuumpumpe eingeschaltet und stufenweise ein Unterdruck von zunächst 100, dann etwa 150 bis maximal 300 Torr eingestellt. Das Lösungsmittel der Suspension wird dabei durch die Poren des Substrates gesaugt. Durch Sichtkontrolle wird sichergestellt, daß keine Suspension an den Seiten zwischen Substrat und Dichtung durchläuft. In diesem Fall muß die Probe verworfen werden.

Nach maximal 20 Minuten ist das gesamte Ethanol der Suspension abgesaugt und die gebildete Elektrolytschicht schon relativ trocken. Nun wird langsam belüftet, und das beschichtete Substrat kann vorsichtig entnommen werden. Dazu entfernt man Klemmring, Silikonkautschukdichtung und Silikonmaske und schiebt dann vorsichtig das beschichtete Substrat direkt auf eine Plexiglasunterlage.

Die Trocknung der Elektrolytschichten ist unproblematisch. Sie erfolgt bei Raumtemperatur an Luft. Selbst eine Sinterung ohne vorhergehende Trocknung ist ohne Rißbildung in der Schicht möglich. In der Regel werden die Proben bei Raumtemperatur an Luft über Nacht getrocknet. Dazu werden sie auf einer Plexiglasunterlage in einem Plexiglasbehälter aufbewahrt, dessen Deckel nur einen schmalen Spalt weit geöffnet ist. Nach 24 Stunden Trocknung werden die beschichteten Substrate gewogen.

Die mit Elektrolyt beschichteten Anodensubstrate werden an Luft bei 1400°C endgesintert. Der Ofen hat sechs Arbeitsebenen, die mit jeweils vier beschichteten Anodensubstraten auf plangeschliffenen SiC-Platten belegt werden. Die Sinterung erfolgt nach folgendem Fahrprogramm:
- Aufheizung bis 1400°C mit 1 K/min,
- Haltezeit bei 1400°C: 5 Stunden,
- Abkühlung von 1400°C bis Raumtemperatur mit 5 K/min.

## Patentansprüche

1. Verfahren zur Herstellung einer dünnen Schicht auf einem porösen Substrat mit den Schritten
- Aufgießen einer Suspension auf das Substrat
- anschließender Trocknung und Sinterung der Substrat-Schicht-Einheit
- mit Feststoffanteilen in der Suspension, deren Durchmesser so bemessen sind, daß hierdurch die Poren des Substrates zugesetzt werden
- die Suspension enthält Feststoffanteile, die zumindest 5-fach, insbesondere 8 bis 12-fach kleiner als die Feststoffanteile sind, die der Zusetzung der Poren dienen.

2. Verfahren nach vorhergehendem Anspruch, bei dem während des Aufgießens der Suspension ein Vakuum auf der Seite der Elektrode erzeugt wird, die der zu beschichtenden Seite gegenüberliegt.

3. Verfahren nach einem der vorhergehenden Ansprüche, bei dem der Feststoffanteil in der Suspension im Verhältnis zur Substratoberfläche so gewählt ist, daß hierdurch auf dem Substrat Schichtdicken von ½ bis 200 µm insbesondere bis 50 µm hergestellt werden.

4. Verfahren nach einem der vorhergehenden Ansprüche, bei dem der maximale Durchmesser der groben Feststoffanteile der Suspension gleich der minimalen Porengröße im Substrat ist,bei dem die dünne Schicht eine Elektrolytschicht und das Substrat eine Elektrode ist.

## Claims

1. Process for producing a thin coating on a porous substrate, comprising the following steps:
- pouring a suspension onto the substrate
- thereafter drying and sintering the substrate/coating unit
- with solid constituents in the suspension, the diameters of which have dimensions such that they block up the pores of the substrate
- the suspension contains solid constituents that are at least 5 times smaller, more particularly 8 to 12 times smaller, than the solid constituents used to block up the pores.

2. Process according to the preceding claim, wherein whilst the suspension is being poured on, a vacuum is generated on the side of the electrode that is opposite to the side to be coated.

3. Process according to either of the preceding claims, wherein the solid constituent in the suspension is selected in a ratio to the substrate surface such that coating thicknesses of from 1/2 to 200 µm, more particularly up to 50 µm, are produced on the substrate.

4. Process according to any of the preceding claims, wherein the maximum diameter of the coarse solid constituents of the suspension is the same as the minimum pore size in the substrate, in which the thin coating is an electrolyte coating and the substrate is an electrode.

## Revendications

1. Procédé de production d'une mince couche sur un substrat poreux par les stades
- de coulée d'une suspension sur le substrat
- de séchage ensuite et de frittage de l'unité substrat-couche
- avec des parties de matières solides dans la suspension dont le diamètre est tel que les pores du substrat en sont obstrués
- la suspension contient des parties de matières solides qui sont au moins 5 fois, et notamment 8 à 12 fois plus petites que les parties de matières solides qui servent à obstruer les pores.

2. Procédé suivant la revendication précédente, dans lequel on produit, pendant la coulée de la suspension, un vide du côté de l'électrode qui est opposé à la face à revêtir.

3. Procédé suivant l'une des revendications précédentes, dans lequel on choisit la proportion de matières solides dans la suspension par rapport à la surface du substrat, de manière à obtenir ainsi sur le substrat des épaisseurs de couche de ½ à 200 µm et notamment allant jusqu'à 500 µm.

4. Procédé suivant l'une des revendications précédentes, dans lequel le diamètre maximum des parties grossières de matières solides de la suspension est égal à la dimension minimum des pores du substrat, la couche mince étant une couche d'électrolyte et le substrat étant une électrode.
